# FASCICULE DE BREVET EUROPEEN

(11) **EP 1 068 590 B1**
(45) Date de publication et mention de la délivrance du brevet: **03.12.2003**
(21) Numéro de dépôt: 99910435.9
(22) Date de dépôt: 26.03.1999
(51) Int. Cl.: G06K 19/077

(54) **CARTE A CIRCUIT INTEGRE SANS CONTACT COMPORTANT DES MOYENS D'INHIBITION**
KONTAKLOSE IC KARTE MIT SPERRMITTELN
CONTACTLESS INTEGRATED CIRCUIT CARD COMPRISING INHIBITING MEANS

(30) Priorité: 30.03.1998 FR 9804197
(43) Date de publication de la demande: 17.01.2001
(73) Titulaire: Gemplus, 13881 Gémenos Cedex (FR)
(72) Inventeur: PATRICE, Philippe, Bâtiment D, F-13190 Allauch (FR); ODDOU, Laurent, F-13600 La Ciotat (FR); FREEMAN, Ray, F-13420 Gémenos (FR); DEFFONTAINES, Thierry, F-13380 Roquefort la Bedoule (FR); ZAFRANY, Michael, F-13006 Marseille (FR)
(86) Numéro de dépôt international: FR9900704
(87) Numéro de publication internationale: WO99050789

(56) Documents cités:
- EP-A- 0 706 153
- EP-A- 0 899 683
- EP-A- 0 901 101
- WO-A-93/12513

## Description

### Description pour les Etats contractants suivants : DE, FR, GB, IT

L'invention se rapporte à une carte à circuit intégré comportant des moyens d'inhibition, de type sans contact.

Une carte sans contact où un corps de carte en forme de plaque porte un circuit intégré et une antenne est apte à communiquer à distance avec un terminal de réception. L'antenne, qui s'étend dans le plan du corps de carte, est réalisée sous la forme d'un enroulement, sur plusieurs spires, d'un chemin conducteur.

Ces cartes aussi appelées cartes à puce, sont utilisées en tant que moyen de paiement d'un service. A chaque utilisation du service correspondant, au moins une unité de valeur est décrémentée dans un stock initial d'unités de valeur chargé dans la mémoire de la carte à puce. De telles applications se retrouvent par exemple dans les cartes téléphoniques et dans les cartes de photocopieur.

Aussi, les utilisateurs achètent une carte qui est initialement munie en mémoire d'un nombre donné d'unités de valeur correspondant au crédit maximal.

Il est assez facile de garantir à l'utilisateur qui achète une carte supposée comporter le nombre maximal d'unités de valeur, tout simplement en entourant la carte d'une enveloppe scellée. Par exemple un emballage "cellophane", empêche tout contact électrique avec les pistes conductrices.

Lorsqu'il s'agit d'une carte sans contact un échange d'information peut alors se faire au travers de l'enveloppe de cellophane, laquelle ne peut donc plus faire office de garantie de la non utilisation préalable de la carte.

L'invention a donc pour but de proposer une carte à circuit intégré, à fonctionnement sans contact dans laquelle sont prévus des moyens permettant d'empêcher toute utilisation frauduleuse de la carte avant une première utilisation de celle-ci par un utilisateur autorisé.

Dans ce but, l'invention propose une carte selon la revendication.

Citons le document EP-A-0599079 qui prévoit une carte à contacts de dimensions normalisées comprenant une portion séparable du corps de carte. La rupture de cette portion permet l'insertion de la carte dans un lecteur. La présence de cette portion sur une carte à contacts est donc garante du fait que la carte n'a jamais été lue par un lecteur.

Le document DE-A-4205556 décrit une carte sans contact comportant un interrupteur permettant de relier un condensateur en parallèle sur l'antenne de la carte. La mise en parallèle du condensateur avec l'antenne empêche la carte de communiquer avec l'extérieur. L'inconvénient de cette solution est qu'elle ne permet pas de garantir à un utilisateur que la carte qu'il vient d'acquérir n'a jamais été utilisée auparavant.

Le document EP-A-0901101 décrit une carte sans contact avec un circuit de court circuitage. La carte est maintenue inopérante à moins que ce circuit soit ouvert et que la carte soit rendue utilisable. Le circuit de court circuitage peut être ouvert en retirant une partie d'identification poinçonnée qui forme tout l'embout d'une partie principale d'un corps de carte.

Le document EP-A-0899683 décrit une carte sans contact dont l'état de fonctionnement possible / impossible est rendu visible par une portion séparable en coin apte à court circuiter une bobine de couplage électromagnétique.

D'autres caractéristiques et avantages de l'invention ressortiront de la description qui suit, en se référant aux dessins annexés dans lesquels:

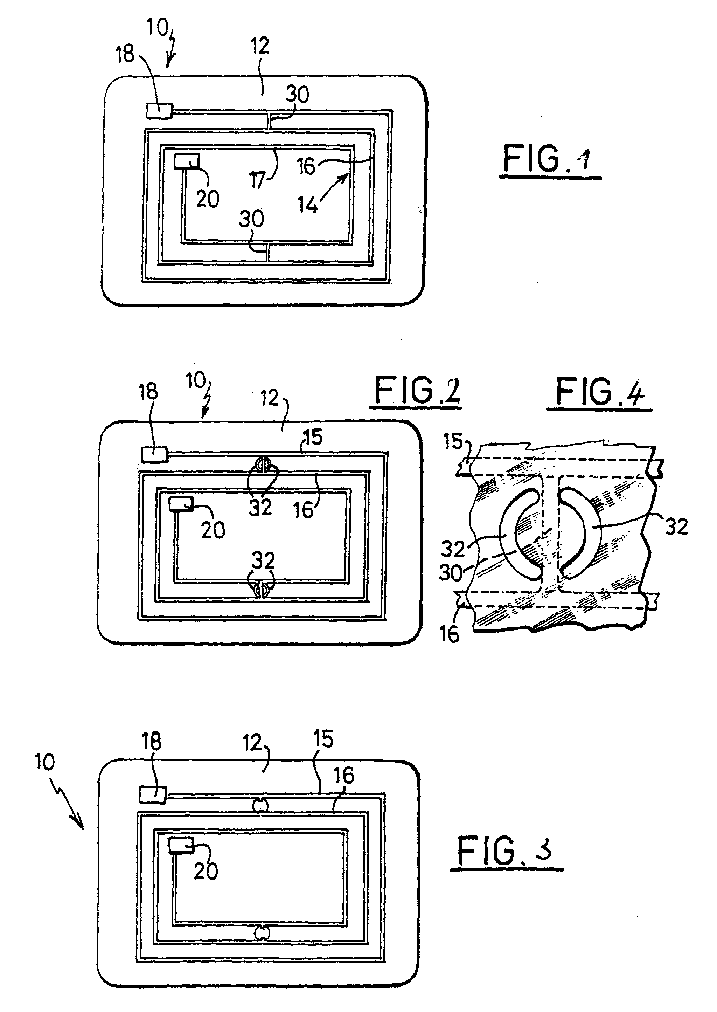

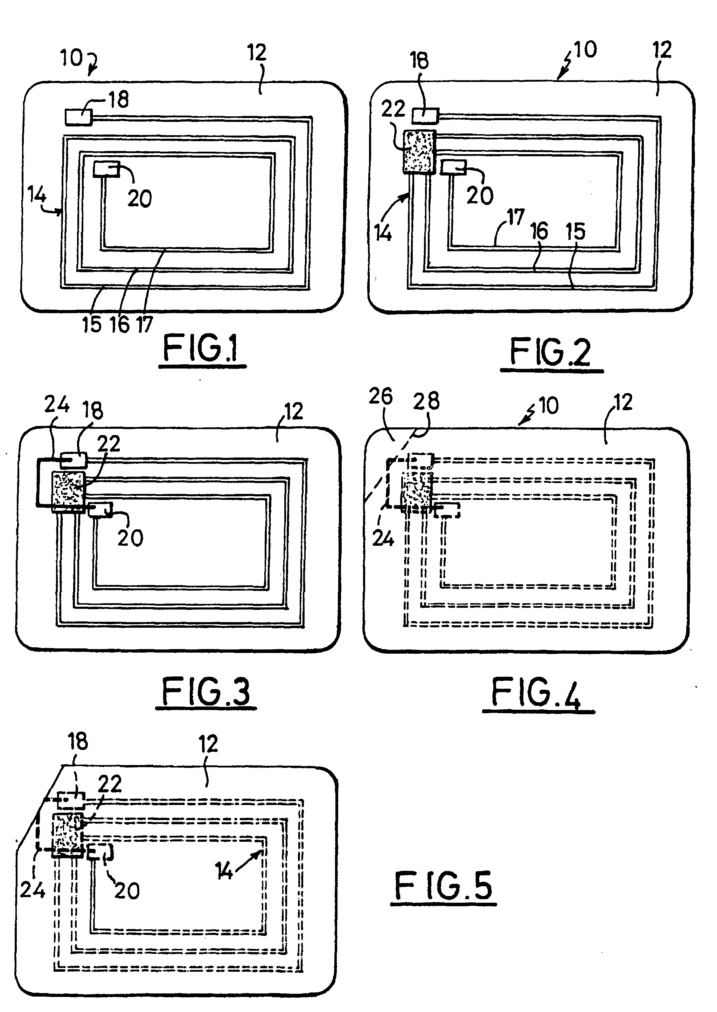

- les figures 1 à 4 illustrent le mode de réalisation de l'invention.

On a illustré sur les figures 1 à 4 différentes étapes d'un procédé de fabrication d'une carte selon l'invention. A l'étape illustrée à la figure 1, on peut voir que l'antenne 14 comporte des ponts de liaison 30 qui sont réalisés en même temps que celle-ci, par exemple par sérigraphie, par gravure ou par métallisation. Ces ponts de liaison 30 ne peuvent donc relier que de spires consécutives de l'enroulement. On a donc prévu plusieurs ponts de liaison 30 reliant entre elles différentes spires de l'intermédiaire.

La carte 10 peut alors être recouverte d'une couche externe de protection. Comme on peut le voir à la figure 2 la carte ainsi obtenue est alors pourvue d'amorces de rupture 32 qui sont plus particulièrement illustrées à la figure 4. On peut voir que les amorces de rupture 32 sont réalisées sous la forme d'une paire d'entailles en arc de cercle aménagées dans le corps de carte 12 de part et d'autre de chaque pont de liaison 30 de telle manière que la zone 32 qui porte le pont de liaison 30 se trouve fragilisée par rapport au reste de la carte duquel elle peut alors être facilement séparée.

Cette opération peut être réalisée par exemple à l'aide d'un outil de découpe tel un outil de poinçonnage. De préférence, on prévoira que la carte 10 ne puisse être utilisée que lorsque tous les ponts de liaison 30 ont été rompus, ainsi que cela est illustré à la figure 3.

Dans l'invention les deux bornes 18, 20 de l'antenne 14 par lesquelles celle-ci est reliée au circuit intégré sont agencées l'une à l'intérieur et l'autre à l'extérieur de l'enroulement du conducteur 16.

Toutefois, il est connu de réaliser des antennes dans lesquelles les deux bornes 18, 20 sont agencées toutes les deux soit à l'intérieur soit à l'extérieur de l'enroulement. Pour cela, il est nécessaire de réaliser une liaison électrique traversant les spires intermédiaires avec interposition d'une pastille isolante.

D'une manière générale, ledit circuit électrique (ou électronique) peut comprendre un élément de circuit apte à inhiber le fonctionnement au moins partiel dudit circuit et dont la rupture permet le fonctionnement au moins partiel dudit circuit.

Le circuit électrique peut bien sûr comprendre et/ou être relié à un composant électronique comme un circuit intégré d'une puce électronique.

Dans une variante plus sophistiquée, ledit élément de circuit peut être une clé de verrouillage logique ou analogique notamment à capacité, ou à circuit résonnant, etc.

L'élément de circuit peut s'étendre dans une zone dudit support mais il peut également s'étendre en dehors de la matière du support. Ainsi, par exemple, on peut avoir une boucle ou un segment visible et sécable à l'extérieur du support.

Dans un exemple dans lequel le support comprend au moins une puce à circuit intégré, et le cas échéant une antenne, l'élément de circuit (notamment court-circuit) peut-être relié au circuit intégré par deux plots de celui-ci de manière à inhiber la fonctionnalité totale ou partielle de celui-ci.

### Description pour les Etats contractants suivants : AT, BE, CH, LI, ES, PT

L'invention se rapporte à une carte à circuit intégré comportant des moyens d'inhibition. La carte peut être de type sans contact ou à contact.

L'invention se rapporte particulièrement à une carte à circuit intégré du type sans contact, du type dans lequel un corps de carte en forme de plaque porte un circuit intégré et une antenne par laquelle le circuit intégré est apte à communiquer à distance avec un terminal de réception, et du type dans lequel l'antenne, qui s'étend dans le plan du corps de carte, est réalisée sous la forme d'un enroulement, sur plusieurs spires, d'un chemin conducteur.

Dans une application particulièrement courante, les cartes à circuit intégré, aussi appelées cartes à puce, sont utilisées en tant que moyen de paiement d'un service. A chaque utilisation du service correspondant, au moins une unité de valeur est décrémentée dans un stock initial d'unités de valeur chargé dans la mémoire de la carte à puce. De telles applications se retrouvent par exemple dans les cartes téléphoniques et dans les cartes de photocopieur.

Aussi, les utilisateurs achètent une carte qui est initialement munie en mémoire d'un nombre donné d'unités de valeur correspondant au crédit maximal.

Dans la plupart des applications dans lesquelles la carte à circuit intégré est utilisée comme moyen de paiement, les cartes utilisées sont de type carte à contact dans lesquelles la carte comporte des pistes conductrices qui sont raccordées au module électronique ou circuit intégré, et qui sont destinées à permettre une liaison électrique entre la carte et le terminal de réception.

Dans ce cas, il est assez facile de garantir à l'utilisateur qui achète une carte supposée comporter le nombre maximal d'unités de valeur, tout simplement en entourant la carte d'une enveloppe scellée, par exemple sous la forme d'un emballage "cellophane", qui empêche tout contact électrique avec les pistes conductrices.

Une autre solution, décrite dans le document EP-0.599.079, consiste à prévoir une carte à contacts de dimensions normalisées comprenant une portion séparable du corps de carte. La rupture de cette portion permet l'insertion de la carte dans un lecteur. La présence de cette portion sur une carte à contacts est donc garante du fait que la carte n'a jamais été lue par un lecteur.

Une telle solution n'est toutefois pas satisfaisante lorsqu'il s'agit d'une carte sans contact avec laquelle les échanges d'informations s'effectuent à distance, par exemple par ondes radiofréquences. En effet, cet échange d'information peut alors se faire au travers de l'enveloppe de cellophane, laquelle ne peut donc plus faire office de garantie de la non utilisation préalable de la carte.

Le document DE-42.05.556 décrit une carte sans contact comportant un interrupteur permettant de relier un condensateur en parallèle sur l'antenne de la carte. La mise en parallèle du condensateur avec l'antenne empêche la carte de communiquer avec l'extérieur. L'inconvénient de cette solution est qu'elle ne permet pas de garantir à un utilisateur que la carte qu'il vient d'acquérir n'a jamais été utilisée auparavant.

L'invention a donc pour but de proposer une nouvelle conception d'une carte à circuit intégré à fonctionnement sans contact, ou carte à puce à fonctionnement sans contact, dans laquelle il est prévu des moyens permettant d'empêcher toute utilisation frauduleuse de la carte à fonctionnement sans contact avant une première utilisation de celle-ci par un utilisateur autorisé.

Dans ce but, l'invention propose une carte conforme à la revendication 1.

Selon d'autres caractéristiques de l'invention :
- l'antenne est reliée au circuit intégré par l'intermédiaire de deux bornes, et, avant d'être rompu, le pont de liaison relie les deux bornes ;
- le pont de liaison relie une spire interne à une spire externe de l'antenne ;
- la carte comporte plusieurs ponts de liaison qui relient chacun deux spires consécutives de l'enroulement ;
- la carte comporte plusieurs zones de rupture destinées chacune à permettre la rupture d'au moins un pont de liaison ;
- le pont de liaison est réalisé simultanément avec l'enroulement ;
- le pont de liaison est réalisé sous la forme d'un élément rapporté par rapport à l'enroulement ; et
- le pont de liaison chevauche des spires de l'enroulement, et il est prévu un isolant qui est interposé entre le pont de liaison et les spires.

D'autres caractéristiques et avantages de l'invention ressortiront de la description qui suit, en se référant aux dessins annexés dans lesquels:
- les figures 1 à 5 sont des vues schématiques d'une carte à puce conforme aux enseignements de l'invention, représentée à différentes étapes de sa fabrication et de son utilisation;
- les figures 6 à 9 illustrent un deuxième mode de réalisation de l'invention ;
- les figures 10 à 12 illustrent un troisième mode de réalisation de l'invention ;
- les figures 13 à 15 illustrent un quatrième mode de réalisation de l'invention.

On a illustré sur les figures 1 à 5 différentes étapes de la fabrication d'une carte à circuit intégré selon un premier mode de réalisation de l'invention.

Une carte à circuit intégré 10 comporte pour l'essentiel un corps de carte 12 qui présente la forme d'une plaque rectangulaire à coins arrondis et qui est généralement réalisé en matière plastique par injection ou lamination. Le corps de carte 12 porte un circuit intégré (non représenté), aussi appelé puce, qui peut par exemple être noyé dans le corps de carte 12.

Comme on peut le voir à la figure 1, le corps de carte 12 porte, sur une face de ses deux faces, une antenne 14.

L'antenne 14 peut être réalisée par exemple par sérigraphie d'une encre conductrice, ou par gravure de cuivre, d'aluminium, ou d'un alliage étain-plomb. L'antenne 14 peut encore être réalisée par tout procédé de métallisation d'une matière plastique. L'épaisseur typique d'une pastille conductrice ainsi formée est comprise par exemple entre 3 et 50 micromètres.

L'antenne 14 est de manière classique réalisée sous la forme d'un conducteur continu 16 qui s'enroule selon une spirale rectangulaire présentant un certain nombre de spires disposées concentriquement et s'étendant donc dans le plan du corps de carte 12. Le conducteur 16 s'enroule ainsi en spirale depuis une spire externe 15 jusqu'à une spire interne 17. Les deux extrémités du conducteur 16 forment respectivement une borne externe 18 et une borne interne 20 par lesquelles l'antenne 14 est destinée à être raccordée au circuit intégré.

Dans une étape ultérieure de fabrication de la carte de 10, qui est représentée à la figure 2, on réalise une pastille isolante 22 qui vient recouvrir une partie des spires de l'enroulement du conducteur 16. Plus particulièrement, la pastille isolante 22 est agencée sur les spires intermédiaires entre la spire interne 17 et la spire externe 15, au voisinage des deux bornes 18, 20 qui sont regroupées dans un coin du quadrilatère formé par l'enroulement.

La pastille isolante 22 peut être réalisée par dépôt d'un matériau diélectrique par exemple par sérigraphie, par « spray » ou encore par pulvérisation. L'épaisseur de matériau à déposer dépend de la constante diélectrique du matériau. Elle est couramment comprise entre 10 et 30 micromètres.

L'étape de fabrication illustrée à la figure 3 consiste en la réalisation du pont de liaison 24 selon l'invention. Le pont de liaison 24 est un conducteur qui relie les deux bornes 18, 20, c'est-à-dire la spire interne 17 à la spire externe 15 de l'enroulement. Le pont de liaison 24 chevauche ainsi les spires intermédiaires mais il n'entre pas en contact avec celles-ci grâce à la présence de la pastille isolante 22. Le pont de liaison 24 peut être réalisé selon la même technique que le conducteur qui constitue l'antenne 14, ou selon une technique différente.

Selon un aspect de l'invention, le pont de liaison 24 s'étend en dehors de l'enroulement de l'antenne 14 et il s'étend plus particulièrement dans une zone de la carte 10 qui sera destinée à être rompue ultérieurement. En l'occurrence, le pont de liaison 24 forme une boucle qui s'étend dans un coin du support de carte 12.

On a illustré à la figure 4 la carte 10 après que celle-ci a été recouverte d'une couche extérieure protectrice destinée à protéger l'antenne 14 et le pont de liaison 24 qui se trouvent alors noyés dans le corps de carte, tout comme le circuit intégré. Cette couche protectrice n'est toutefois pas obligatoire pour la mise en oeuvre de l'invention.

On pratique alors dans le corps de carte une amorce de rupture 28, par exemple sous la forme d'une entaille, pour délimiter la zone 26, dans laquelle s'étend, en partie, le pont de liaison 24, du reste de la carte 10.

A cette étape de fabrication, la carte 10 est prête à être distribuée et commercialisée. Elle peut éventuellement être emballée dans une enveloppe plastique, éventuellement transparente.

Lorsque l'utilisateur achète la carte, celle-ci se présente donc sous la forme illustrée à la figure 4. Or, dans cet état, la carte 10 est inutilisable car l'antenne 14 est court-circuitée du fait de la présence du pont de liaison 24. Ainsi, l'inductance totale de l'antenne 14 est très faible du fait que, par la présence du pont de liaison 24, tout se passe comme si celle-ci ne comportait qu'une seule spire.

Lorsque l'utilisateur veut mettre la carte en service, soit dès qu'il l'achète, soit au moment de la première utilisation, il lui faut alors séparer la zone 26 du reste de la carte, en l'occurrence par une simple flexion de celle-ci. L'amorce de rupture 28 constituée par l'entaille permet un détachement facile de la zone 26. En se détachant, la zone 26 provoque la rupture du pont de liaison 24 qui n'est donc plus à même de court-circuiter l'antenne 14, laquelle rend alors possible la communication de la carte avec un terminal de réception approprié.

Ainsi, en subordonnant le fonctionnement de la carte 10 à une rupture préalable de la zone 26 dans laquelle s'étend en partie le pont de liaison 24, l'utilisateur a la garantie que lorsqu'il achète la carte 10, celle-ci n'a pas pu être précédemment utilisée, à condition bien entendu qu'il vérifie l'intégrité de celle-ci. Dans le cas où il achète une carte comportant un crédit d'un nombre donné d'unités de valeur, l'utilisateur est donc sûr que la carte comporte le nombre d'unités de valeur indiqué.

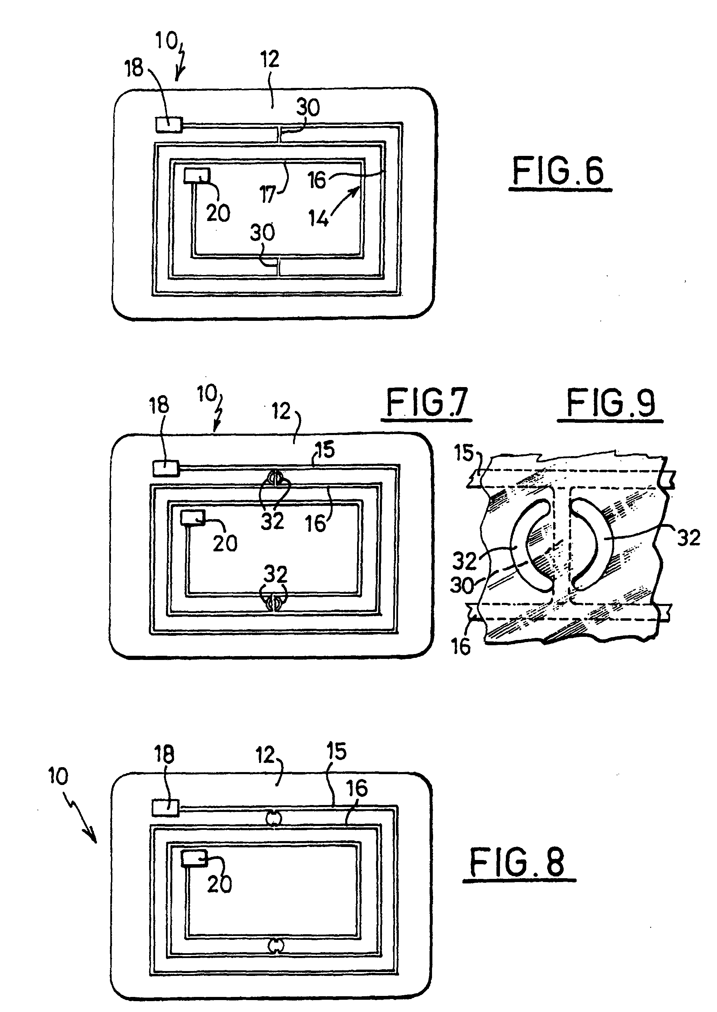

On a illustré sur les figures 6 à 8 différentes étapes d'un procédé de fabrication d'une carte selon un second mode de réalisation de l'invention. A l'étape illustrée à la figure 6, qui correspond à celle illustrée à la figure 1 pour le mode de réalisation précédent, on peut voir que l'antenne 14 comporte des ponts de liaison 30 qui sont réalisés en même temps que celle-ci, par exemple par sérigraphie, par gravure ou par métallisation. Ces ponts de liaison 30 ne peuvent donc relier que de spires consécutives de l'enroulement. On a donc prévu plusieurs ponts de liaison 30 reliant entre elles différentes spires de l'intermédiaire.

La carte 10 peut alors être recouverte d'une couche externe de protection, comme cela a été vu en référence à la figure 4 concernant le premier mode de réalisation. Comme on peut le voir à la figure 7 la carte ainsi obtenue est alors pourvue d'amorces de rupture 32 qui sont plus particulièrement illustrées à la figure 9. On peut voir que les amorces de rupture 32 sont réalisées sous la forme d'une paire d'entailles en arc de cercle aménagées dans le corps de carte 12 de part et d'autre de chaque pont de liaison 30 de telle manière que la zone 32 qui porte le pont de liaison 30 se trouve fragilisée par rapport au reste de la carte duquel elle peut alors être facilement séparée.

Cette opération peut être réalisée par exemple à l'aide d'un outil de découpe tel un outil de poinçonnage. De préférence, on prévoira que la carte 10 ne puisse être utilisée que lorsque tous les ponts de liaison 30 ont été rompus, ainsi que cela est illustré à la figure 8.

Dans les deux exemples de réalisation de l'invention qui viennent d'être décrits, les deux bornes 18, 20 de l'antenne 14 par lesquelles celle-ci est reliée au circuit intégré sont agencées l'une à l'intérieur et l'autre à l'extérieur de l'enroulement du conducteur 16.

Toutefois, il est connu de réaliser des antennes dans lesquelles les deux bornes 18, 20 sont agencées toutes les deux soit à l'intérieur soit à l'extérieur de l'enroulement. Pour cela, il est nécessaire de réaliser une liaison électrique traversant les spires intermédiaires avec interposition d'une pastille isolante.

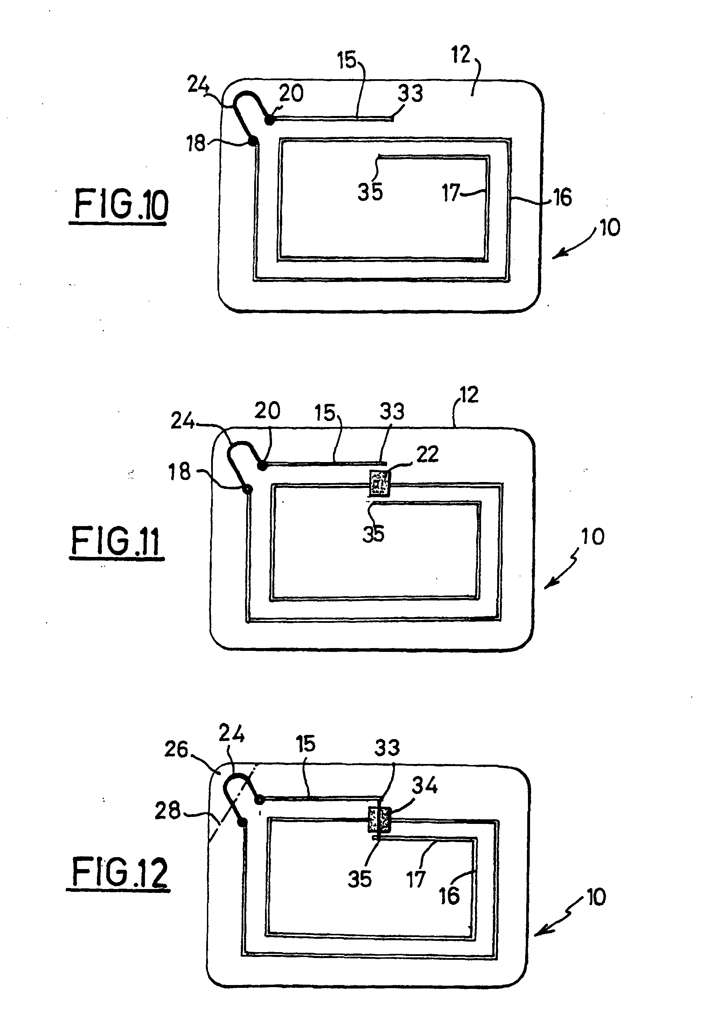

Un premier exemple d'une telle réalisation est illustré aux figures 10 à 12.

Dans l'exemple de réalisation illustré à la figure 10, on a imprimé sur un support de carte un enroulement en spirale rectangulaire similaire à ceux vus précédemment. Toutefois, on peut voir que les deux bornes 18, 20 ont été prévues à proximité l'une de l'autre sur la spire externe 17 de l'enroulement. Plus précisément, les deux bornes 18, 20 sont reliées entre elles par une portion de conducteur qui forme le pont de liaison 24 et qui s'étend selon une boucle à l'extérieur de l'enroulement, dans une zone de la carte qui est destinée à être rompue. En l'occurrence, la boucle formée par le pont de liaison s'étend jusque dans un coin 26 de la carte qui est délimité par une amorce de rupture 28.

Dans l'état illustré à la figure 10, l'enroulement est donc continu entre ses deux extrémités, externe 33 et interne 35, qui sont agencées à proximité l'une de l'autre mais de part et d'autre des spires intermédiaires.

Dans une étape ultérieure de fabrication illustrée à la figure 11, les spires intermédiaires entre la spire externe 15 et la spire interne 17 sont recouvertes, au niveau des extrémités 33, 35 d'une pastille isolante 22. A l'étape illustrée à la figure 12, les extrémités 33, 35 de l'enroulement sont reliées électriquement par une patte de liaison 34 qui chevauche les spires intermédiaires mais qui en est isolée par la pastille 22.

On voit alors que l'antenne 14 ainsi réalisée est en court-circuit. Elle est par ailleurs reliée au circuit intégré par les deux bornes 18, 20.

Comme vu précédemment, après report et connexion de la puce, la carte 10 peut alors être munie d'une couche externe de protection destinée à protéger l'antenne 14, le pont de liaison 24 et la patte de liaison 34. Cette étape n'est toutefois pas obligatoire.

Lorsque que l'utilisateur achète la carte, celle-ci est donc inutilisable. Toutefois, en détachant la zone 26 du reste de la carte, l'utilisateur rompt le pont de liaison 24 de telle sorte que l'enroulement se trouve de nouveau ouvert et que l'antenne peut alors fonctionner.

Les extrémités de l'enroulement sont alors formées par les deux bornes 18, 20, la borne 20 étant reliée à la spire interne 17 de l'enroulement par l'intermédiaire de la patte de liaison 34.

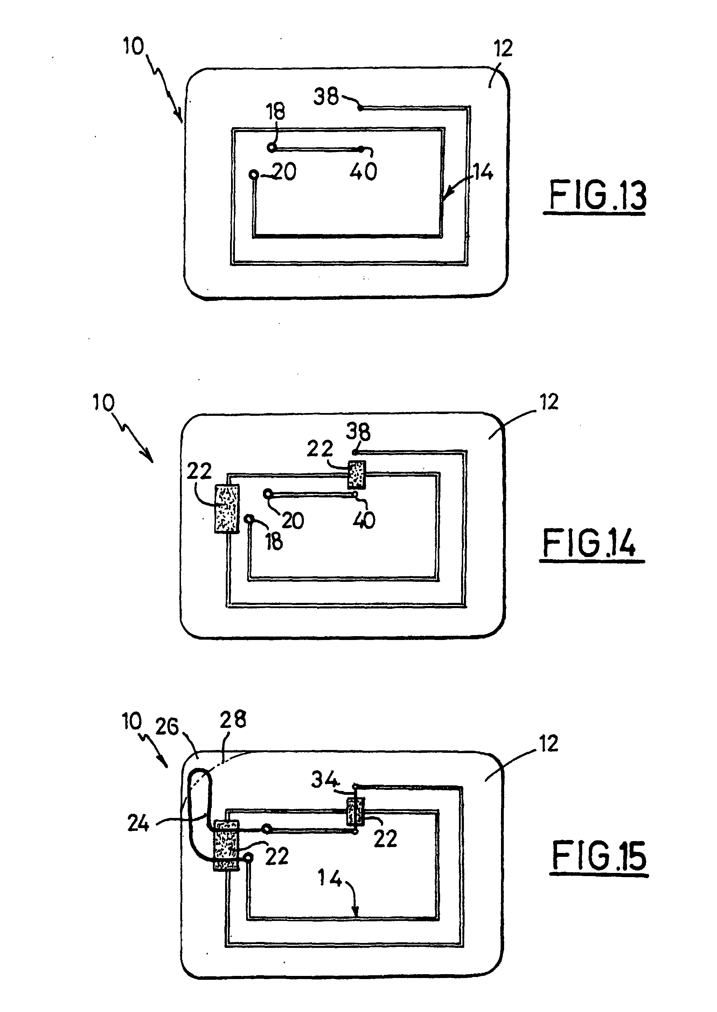

Dans le quatrième un mode de réalisation de l'invention qui est illustré aux figures 13 à 15, on cherche à obtenir une antenne dont les bornes 18, 20 soient agencées à l'intérieur de l'enroulement constituant l'antenne 14. Cela permet notamment de disposer de manière simple le circuit intégré au centre de l'enroulement.

A cet effet, on peut voir à la figure 13 qu'il est réalisé un enroulement discontinu d'un conducteur porté par le corps de carte 12. Cet enroulement discontinu comporte de deux bornes 18, 20 qui sont destinées à être reliée par le pont de liaison 24 au sens de l'invention et deux extrémités 38, 40 qui sont destinées à être reliées par une patte de liaison 34 identique à celle vue en relation avec le mode de réalisation des figures 10 à 12.

Le pont de liaison 24 et la patte de liaison sont destinés à être réalisé de la même manière, au cours de la même étape de fabrication de la carte 10.

Ainsi, les spires intermédiaires entre la spire externe 15 et la spire interne 17 sont recouvertes, en deux endroits différents, d'une pastille isolante 22. La première pastille isolante est destinée à permettre au pont de liaison 24 qui doit s'étendre à l'extérieur de l'enroulement de franchir les spires intermédiaires sans être en contact électrique avec celles-ci. La deuxième pastille isolante s'étend entre les extrémités 38, 40 de l'enroulement de manière à éviter que la patte de liaison 34 ne provoque un court-circuit entre les spires.

A l'étape de la fabrication illustrée à la figure 15, on a réalisé d'une part le pont de liaison 24 et d'autre part la patte de liaison 34 qui, tant que le pont de liaison 24 est intact, font que l'enroulement de l'antenne 14 est en court-circuit. Toutefois dès que l'utilisateur a rompu le pont de liaison 24 en détachant la zone 26 de la carte qui est délimitée par l'amorce de rupture 28, l'antenne 14 n'est plus en court-circuit et est donc apte à transmettre des informations.

L'invention est également utilisable aux cartes à contact. En exemple de réalisation, il suffit de connecter deux extrémités d'une boucle 24 respectivement à deux plages de contact appropriées d'un module de carte à puce ou à la puce.

Dans le premier cas, le procédé de réalisation d'une carte à contact avec moyen d'inhibition peut prévoir de laisser déboucher les deux extrémités de la boucle dans une cavité d'un corps de carte notamment sur son plan supérieur au contact du film support d'un module à circuit intégré. D'autre part, on prévoit des orifices traversant le film support du module pour accéder au plages de contact, on remplit les orifices de colle conductrice, puis on reporte le module dans la cavité de manière que la colle tombe au regard des extrémités de la boucle pour assurer une connexion.

Comme on l'aura compris, l'invention peut concerner tout support contenant un circuit électrique comportant un élément de court-circuit inhibant le fonctionnement dudit circuit électrique, ledit élément comportant une portion s'étendant dans une zone dudit support, ladite portion étant facilement séparable du reste de l'élément.

D'une manière générale, ledit circuit électrique (ou électronique) peut comprendre un élément de circuit apte à inhiber le fonctionnement au moins partiel dudit circuit et dont la rupture permet le fonctionnement au moins partiel dudit circuit.

Le circuit électrique peut bien sûr comprendre et/ou être relié à un composant électronique comme un circuit intégré d'une puce électronique.

Dans une variante plus sophistiquée, ledit élément de circuit peut être une clé de verrouillage logique ou analogique notamment à capacité, ou à circuit résonnant, etc.

L'élément de circuit peut s'étendre dans une zone dudit support mais il peut également s'étendre en dehors de la matière du support. Ainsi, par exemple, on peut avoir une boucle ou un segment visible et sécable à l'extérieur du support.

Dans un exemple dans lequel le support comprend au moins une puce à circuit intégré, et le cas échéant une antenne, l'élément de circuit (notamment court-circuit) peut-être relié au circuit intégré par deux plots de celui-ci de manière à inhiber la fonctionnalité totale ou partielle de celui-ci.

## Revendications (Revendications pour l'(les) Etat(s) contractant(s) suivant(s): DE, FR, GB, IT)

1. Carte à fonctionnement sans contact où un corps de carte (12) porte un circuit intégré et une antenne (14) réalisée sous la forme d'un enroulement, sur plusieurs spires, d'un conducteur (16), **caractérisée en ce que** ladite carte comporte plusieurs ponts de liaison (30) qui relient chacun deux spires consécutives dudit enroulement, lesdits ponts de liaison étant destinés à être rompus avant la première utilisation de ladite carte afin de permettre l'utilisation de la carte.

## Revendications (Revendications pour l'(les) Etat(s) contractant(s) suivant(s): AT, BE, CH, ES, LI, PT)

1. Carte à fonctionnement sans contact où un corps de carte (12) porte un circuit intégré et une antenne (14) réalisée sous la forme d'un enroulement, sur plusieurs spires, d'un conducteur (16), **caractérisée en ce que** ladite carte comporte un pont de liaison (24) conducteur reliant au moins deux spires de l'antenne (14) pour en réduire l'inductance et **en ce que** ledit pont de liaison (24) s'étend en partie dans une zone de rupture (26) dudit corps de carte (12), ledit pont de liaison (24) étant destiné à être rompu avant la première utilisation de ladite carte (10).

2. Carte selon la revendication 1, **caractérisée en ce que** ladite antenne (14) est reliée audit circuit intégré par l'intermédiaire de deux bornes (18, 20) et **en ce que**, avant d'être rompu, ledit pont de liaison (24) relie lesdites bornes (18, 20).

3. Carte selon l'une des revendications 1 et 2, **caractérisée en ce que** ledit pont de liaison (24) relie une spire interne (17) à une spire externe (15) de ladite antenne (14).

4. Carte selon l'une des revendications 1 à 3, **caractérisée en ce qu'**elle comporte plusieurs ponts de liaison (30) reliant chacun deux spires consécutives dudit enroulement.

5. Carte selon la revendication 4, **caractérisée en ce qu'**elle comporte plusieurs zones de rupture (32) destinées chacune à permettre la rupture d'au moins un pont de liaison (30).

6. Carte selon l'une des revendications 1 à 5, **caractérisée en ce que** ledit pont de liaison (24) est réalisé sous la forme d'un élément rapporté par rapport audit enroulement.

7. Carte selon la revendication 6, **caractérisée en ce que** ledit pont de liaison (22) chevauche des spires dudit enroulement et **en ce qu'**un isolant (22) est interposé entre ledit pont de liaison (24) et lesdites spires.

8. Support contenant un circuit électrique, ledit circuit électrique comportant un élément inhibant son fonctionnement, **caractérisé en ce que** ledit élément est constitué par un pont de liaison incorporé dans une portion dudit support facilement séparable du reste dudit support.

## Patentansprüche (Patentansprüche für folgende(n) Vertragsstaat(en): DE, FR, GB, IT)

1. Karte zur Verwendung ohne Kontakt, bei der ein Kartenkörper (12) einen integrierten Schaltkreis und eine in Form einer Aufwicklung eines Leiters (16) auf mehre Windungen realisierte Antenne (14) trägt, **dadurch gekennzeichnet, dass** die genannte Karte mehrere Verbindungsbrücken (30) umfasst, die jede zwei aufeinander folgende Windungen der genannten Aufwicklung verbinden, wobei die genannten Verbindungsbrücken dazu bestimmt sind, vor dem ersten Einsatz der Karte abgebrochen zu werden, um den Einsatz der Karte zu erlauben.

## Patentansprüche (Patentansprüche für folgende(n) Vertragsstaat(en): AT, BE, CH, ES, LI, PT)

1. Karte zur Verwendung ohne Kontakt, bei der ein Kartenkörper (12) einen integrierten Schaltkreis und eine in Form einer Aufwicklung eines Leiters (16) auf mehre Windungen realisierte Antenne (14) trägt, **dadurch gekennzeichnet, dass** die genannte Karte eine wenigstens zwei Windungen der Antenne (14) verbindende leitende Verbindungsbrücke (24) umfasst, um die Induktanz zu verringern, und dass sich die genannte Verbindungsbrücke (24) teilweise in einem Bruchbereich (26) des genannten Kartenkörpers (12) erstreckt, wobei die genannte Verbindungsbrücke (24) dazu bestimmt ist, vor dem ersten Einsatz der genannten Karte (10) abgebrochen zu werden.

2. Karte gemäß Anspruch 1, **dadurch gekennzeichnet, dass** die genannte Antenne (14) über zwei Anschlussklemmen (18, 20) mit dem genannten integrierten Schaltkreis verbunden ist und dass die genannte Verbindungsbrücke (24) vor dem Abbrechen die genannten Anschlussklemmen (18, 20) verbindet.

3. Karte gemäß Anspruch 1 und 2, **dadurch gekennzeichnet, dass** die genannte Verbindungsbrücke (24) eine interne Windung (17) mit einer externen Windung (15) der genannten Antenne (14) verbindet.

4. Karte gemäß Anspruch 1 bis 3, **dadurch gekennzeichnet, dass** sie mehrere Verbindungsbrücken (30) umfasst, von denen jede zwei aufeinander folgende Windungen der genannten Aufwicklung verbindet.

5. Karte gemäß Anspruch 4, **dadurch gekennzeichnet, dass** sie mehrere Bruchbereiche (32) umfasst, von denen jede dazu bestimmt ist, den Bruch wenigstens einer Verbindungsbrücke (30) zu ermöglichen.

6. Karte gemäß Anspruch 1 bis 5, **dadurch gekennzeichnet, dass** die genannte Verbindungsbrücke (24) in Form eines im Verhältnis zur genannten Aufwicklung aufgesteckten Elements realisiert ist.

7. Karte gemäß Anspruch 6, **dadurch gekennzeichnet, dass** die genannten Verbindungsbrücke (22) Windungen der genannten Aufwicklung überlappt und dass ein Isolator (22) zwischen der genannten Verbindungsbrücke (24) und den genannten Windungen zwischengeschaltet ist.

8. Einen elektrischen Schaltkreis enthaltender Träger, wobei der genannte elektrische Schaltkreis ein seinen Betrieb inhibierendes Element umfasst, **dadurch gekennzeichnet, dass** das genannte Element durch eine in einem leicht vom Rest des genannten Trägers abtrennbaren Abschnitt des genannten Trägers integrierten Verbindungsbrücke gebildet wird.

## Claims (Claims for the following Contracting State(s): DE, FR, GB, IT)

1. A card with contactless functioning or a card body (12) carries an integrated circuit and an antenna (14) produced in the form of a winding, over several turns, of a conductor (16), **characterised in that** the said card comprises several connecting bridges (30) which each connect two consecutive turns of the said winding, the said connecting bridges being intended to be broken before the first use of the said card so as to allow use of the card.

## Claims (Claims for the following Contracting State(s): AT, BE, CH, ES, LI, PT)

1. A card with contactless functioning or a card body (12) carries an integrated circuit and an antenna produced in the form of a winding, over several turns, of a conductor (16), **characterised in that** said card comprises a conductive connecting bridge (24) connecting at least two turns of the antenna (14) in order to reduce the inductance thereof and **in that** the said connecting bridge (24) extends partly in a rupture zone (26) of the said card body (12), the said connecting bridge (24) being intended to be broken before the first use of the said card (10).

2. A card according to Claim 1, **characterised in that** the said antenna (14) is connected to the said integrated circuit by means of two terminals (18, 20) and **in that**, before being broken, the said connecting bridge (24) connects the said terminals (18, 20).

3. A card according to one of Claims 1 and 2, **characterised in that** the said connecting bridge (24) connects an inner turn (17) to an outer turn (15) of the said antenna (14).

4. A card according to one of Claims 1 to 3, **characterised in that** it comprises several connecting bridges (30) each connecting two consecutive turns of the said winding.

5. A card according to Claim 4, **characterised in that** it comprises several rupture zones (32) each intended to allow the rupture of at least one connecting bridge (30).

6. A card according to one of Claims 1 to 5, **characterised in that** the said connecting bridge (24) is produced in the form of an element attached with respect to the said winding.

7. A card according to Claim 6, **characterised in that** the said connecting bridge (22) straddles the turns of the said winding and **in that** an insulant (22) is interposed between the said connecting bridge (24) and the said turns.

8. A support containing an electrical circuit, the said electrical circuit comprising an element inhibiting its functioning, **characterised in that** the said element consists of a connecting bridge incorporated in a portion of the said support which is easily separable from the rest of the said support.
